# EUROPEAN PATENT SPECIFICATION

(11) **EP 0 322 169 B1**
(45) Date of publication and mention of the grant of the patent: **14.08.1996**
(21) Application number: 88311999.2
(22) Date of filing: 19.12.1988
(51) Int. Cl.: D01F 6/04, D01D 5/247

(54) **Microporous filaments and fibers, process of making same, and articles made therefrom**
Mikroporöse Filamente oder Fasern, Verfahren zur Herstellung derselben und damit hergestellte Artikel
Filaments et fibres microporeux, procédé pour leur fabrication et articles fabriqués à partir de ces filaments ou fibres

(30) Priority: 21.12.1987 US 135240
(43) Date of publication of application: 28.06.1989
(73) Proprietor: ENTEK MANUFACTURING INC., Lebanon Oregon 97355 (US)
(72) Inventor: Howard, Robert E., Lebanon Oregon 97355 (US); Young, James, Corvallis Oregon 97330 (US)
(74) Representative: Skerrett, John Norton Haigh

(56) References cited:
- EP-A- 0 064 837
- EP-A- 0 202 554
- EP-A- 0 265 136
- FR-A- 2 191 280
- FR-A- 2 211 763
- FR-A- 2 457 019
- FR-A- 2 545 276

## Description

### BACKGROUND OF THE INVENTION

This invention relates to filaments and fibers formed of an ultrahigh molecular weight polyolefin that is microporous and wettable.

By "filament" it is intended to mean an essentially continuous strand of material; by "fiber" it is intended to mean a discontinuous strand of material.

By "strand like article" it is intended to mean filaments or fibers.

By "microporous" it is intended to mean a filament or fiber that is comprises of a plurality of interconnecting interstices that communicate with the outside and inside of the filament or fiber body, the interstices comprising a void volume of at least 20 percent of said body and preferably at least 50 percent of said body.

By "wettable" it is intended to mean the property of being able to absorb water.

U.S. Patent No. 4,422,993 discloses spinning solutions of ultrahigh molecular weight polyethylene to form filaments.

U.S. Patent No. 4,545,950 discloses forming filaments, fibers, etc. by extruding a mixture of ultrahigh molecular weight polyethylene and paraffinic wax, cooling and stretching. The wax may be removed to form a microporous article.

One of the features of this invention is to provide microporous polyolefin filaments and fibers which exhibit good wettability. Polyolefin filaments and fibers are not wettable unless treated. The prior art discloses using wetting agents to impart wettability to polyolefin fibers, such, for example, as disclosed in U.S. Patent Np. 3,870,567; treating nonwoven webs with an aqueous bath comprising water, a surfactant, and colloidal silica such as is disclosed in U.S. Patent No. 3,985,580; coating nonwoven webs with a hydrophilic vinyl monomer and catalyst such as is disclosed in U.S. patent No. 4,110,143; and treatment with corona discharge.

EP-A-0202554 is concerned with hollow-fibers.

### SUMMARY OF THE INVENTION

Filaments and fibers of ultrahigh molecular weight polyolefins are formed that have a void volume of at least 20 percent and are wettable. Wettability is imparted by incorporating a finely divided, hygroscopic filler material into the polyolefin extrusion mixture prior to extrusion.

The filaments and fibers are formed by extruding a mixture of the polyolefin and an extractable plasticizer, and subsequently extracting at least part of the plasticizer by use of a solvent or nonsolvent for the plasticizer.

According to the present invention there is provided an attenuated strand like, non-hollow article comprised of 10% to 90% by volume of an ultra high molecular weight polyolefin selected from the group consisting of homopolymers of ethylene, propylene and butylene; 10% to 90% by volume of a hygroscopic filler having a particle size less than 10 microns and a surface area greater than 30 m²/gram; and about 1% to 15% by volume of a plasticizer, in which the polyolefin, filler and plasticizer always add up to 100% by volume; said article having a void volume greater than 20% of the article.

Also according to the present invention there is provided a nonwoven web formed of a multiplicity of the strand like articles as defined in the immediately preceding paragraph, said web having a macroporosity greater than about 50% and a maximum macropore size less than about 25 microns.

Also there may be provided a waterlaid paper web formed of a multiplicity of strand like articles as defined in the penultimate paragraph. The web may contain cellulosic fibers.

Further according to the present invention there is provided a process of forming microporous strand like articles which are wettable comprising forming a mixture of an ultra high molecular weight polyolefin and a hygroscopic filler having a particle size less than about 10 microns and a surface area greater than about 30 m²/gram; feeding the mixture and a plasticizer to the feed port of an extruder; heating and mixing the blend of the mixture and plasticizer in the extruder at a temperature sufficient to plasticate the blend; feeding the extrudate from the extruder to a die suitable for forming strand like articles; expressing strand like articles from the die; and extracting sufficient plasticizer from the strand like articles to achieve a void volume greater than 20%.

### DESCRIPTION OF PREFERRED EMBODIMENTS

The polyolefin employed may be any crystalline homopolymer or copolymer of monoolefins having from two to four carbon atoms, i.e., ethylene, propylene and butylene. Preferred are homopolymers of ethylene and propylene, and most preferred are high density polyethylene and substantially isotactic polypropylene homopolymers. The polyolefin should have an ultra-high molecular weight, i.e., a standard load melt index of less than about 0.04 per ten minutes, and preferably 0, when measured in accordance with ASTM D 1238-70, an intrinsic viscosity greater than about 3.0 and, in the case of polyethylene, an inherent viscosity greater than about 3 dl/g (measured in decalin at 135°C). Minor amounts of lower molecular weight polyolefins may be blended therewith, i.e., up to about 25% by weight.

It has been found that microporous polyolefin filaments and fibers can be formed wich exhibit good wettability by using as a filler admixed with the polyolefin a material which exhibits good affinity for water, i.e., is hygroscope in nature, and can withstand the temperature and pressure conditions existing in the extrusion process. However, the filler should not be soluble in water to any substantial degree.

The following materials may be used as the filler material in the present invention: carbonaceous materials (e.g., carbon black and graphite); metal oxides and hydroxides, such as those of silicon, aluminum, calcium, magnesium, barium, titanium, iron, zinc, and tin; metal carbonates, such as those of calcium and magnesium; minerals such as mica, montmorillonite, kaolinite, attapulgite, asbestos, talc, diatomaceous earth and vermiculite; synthetic and natural zeolites; portland cement; precipitated metal silicates, such as calcium silicate and aluminum polysilicate; alumina silica gels; glass particles, including microbeads, microspheres, flakes and fibers; and salts, such as molybdenum disulfide, zinc sulfide and barium sulfate.

The preferred filler materials are those that have surface silanol groups which can hydrogen bond to water, such as silica, mica, montmorillonite, asbestos, talc, diatomaceous earth, vermiculite, synthetic and natural zeolites, portland cement, silicates and polysilicates, alumina silica gels, and glass particles.

The filler should, desirably, have a high surface area, which means it has either a small particle size or a high degree of porosity (i.e., high surface area or pore volume), or both. The particle size of the filler can range from an average of about 0.01 to about 10 microns in diameter. The surface area of the filler can range from about 30 to about 950 square meters per gram, and preferably in the range of from about 100 to about 500 square meters per gram. The pore volume is desirably greater than about 0.075 cc per gram, and preferably from about 0.1 to about 0.4 cc per gram.

The surface area and pore volume of the filler can be measured using the nitrogen absorption method described by S. Brunauer, P. J. Emett, and E. Teller in the Journal of American Chemical Society, Vol. 6, page 308 (1938), and commonly kown as the BET method.

The preferred plasticizers used in the present invention serve at least three purposes: they enable ultrahigh molecular weight polyolefins to be extruded with conventional extrusion equipment by lowering the melt viscosity; they are the component that is at least partially removed after formation of the filaments or fibers to impart porosity to the product; and the amount left in the final product acts to prevent the product from becoming brittle.

Examples of suitable plasticizers for the present invention are organic esters, such as the sebacates, stearates, adipates, phthalates and citrates; epoxy compounds, such as epoxidized vegetable oil; phosphate esters, such as tricresyl phosphate; hydrocarbon materials such as petroleum oils; and natural oils such as tall oil and linseed oil. The preferred plasticizers are those extractable organic substances that have a solubility parameter close to that of the polyolefin, preferably in the range of from 7.3 to about 8.4. The most preferred plasticizers are petroleum hydrocarbon oils.

Although it is preferred to use a substantially water insoluble plasticizer, the present invention does not exclude the use of a mixture of plasticizers, one of which is water soluble and is substantially removed from the filaments or fibers after formation, so long as the plasticizer that is left in the final product to provide plasticization is substantially water insoluble. Alternatively, a water soluble plasticizer could be used and the filaments or fibers treated with a water insoluble plasticizer after removal of the water soluble plasticizer by extraction. Suitable water soluble plasticizers include ethylene glycol, polyethylene glycol, polypropylene glycol, glycerol, and ethers and esters thereof; alkyl phosphates, such as triethyl phosphate; polyvinyl alcohol; polyacrylic acid and polyvinyl pyrrolidone.

In addition, although it is preferred to use as plasticizers extractable organic substances having a solubility parameter in the range of about 7.3 to about 8.4, extractable organic substances having a solubility parameter greater than 8.4 may be used and extracted, followed by applying a plasticizer having a solubility parameter between about 7.3 to about 8.4 to the filaments or fibers.

Other, conventional, additives may be added to the extrusion mixture, such as antioxidants, colorants and lubricants.

The ultrahigh molecular weight polyolefin component should comprise between about 10 and about 90 percent by volume of the filaments or fibers, preferably between about 40 to about 60 percent by volume.

The filler should comprise between about 10 and about 90 percent by volume of the filaments or fibers, preferably between about 40 and about 60 percent by volume.

The plasticizer component should comprise between about 1 and about 15 percent by volume of the filaments or fibers, preferably between about 1 and about 10 percent by volume.

In the process of the present invention, a blend is introduced into the extruder which comprises from about 5 to about 65 percent by volume of the ultrahigh molecular weight polyolefin component, about 5 to about 60 volume percent of the filler component and about 20 to about 80 percent (preferably about 50 to about 80 percent) by volume of the plasticizer component. Other minor conventional additives may be present in the extrusion mixture in amounts recommended by their manufacturers.

Where the plasticizer is a liquid, as, for example, a petroleum hydrocarbon oil, it is preferred to add a portion of the plasticizer to the dry ingredients during mixing, and to add the rest of the plasticizer directly to the feed port of the extruder together with the "dry" ingredients. The extrusion mixture "dry" components may be mixed prior to introduction to the extrusion operation by any conventional mixing means although it is important that a substantially uniform mixture be obtained.

The extrusion mixture is metered to any conventional extrusion known to be suitable in the art of filament and fiber formation. Screw extruders having two, counterrotating screws are preferred. There are a number of manufacturers supplying such devices which come in various sizes dependent upon the throughput of material desired. The heating zones in the extruder barrel are heated to temperatures to obtain the desired degree of plastication, which depends upon the particular polyolefin selected and the formulation fed to the extruder. For ultrahigh molecular weight polyethylene, it is generally desired to maintain the barrel at temperatures between about 200° and about 250°C.

The output of the extrusion device is fed to a die suitable for forming filaments or fibers, such as a spinneret type die. The optimum temperatures of the die depends upon the particular extrusion mixture employed but it is generally preferable to maintain the die at about the same temperature as that of the extruder barrel. Such dies are well known in the art, and may include manifolds on one or both sides of the die orifices for directing a hot gas stream against the extrudate at an angle designed to attenuate the filaments or fibers being extruded. The temperature of such hot gas stream is desirably maintained in the range of about 280°C to about 540°C.

Alternatively, and especially where continuous filaments are desired, individual filaments or bundles of filaments extruded from the die may be fed into a separate attenuating device employing a heated gas stream to attenuate the filaments.

Attenuation may be accomplished by mechnical tension (e.g., godet rolls) applied to the filaments extruded from the die while the filaments are still at an elevated temperature, or subsequently after the filaments have cooled. It is preferred to perform attenuation of filaments after the filaments have been subjected to the extraction step. Attenuation of filaments tends to make them more supple and improves tensile strength and modulus of elasticity. However, for certain uses it may be desirable to omit attenuation.

After filament or fiber formation, the plasticizer is extracted therefrom. If two or more plasticizers are employed, multistage extraction may be required, particularly if one plasticizer is water insoluble and one is water soluble.

The solvent chosen to extract the plasticizer depends upon the nature of the plasticizer. Where a petroleum hydrocarbon oil is to be extracted, the following solvents are suitable: chlorinated hydrocarbons, such as trichloroethylene, 1,1,1-trichloroethane, methylene chloride, perchloroethylene, tetrachloroethylene, carbon tetrachloride, etc.; hydrocarbon solvents, such as hexane, benzene, petroleum ether, toluene, cyclohexane, etc.; and chlorofluorocarbons, such as trichlorotrifluoroethane. If a water soluble plasticizer such as polyethylene glycol is to be extracted, suitable solvents include: water; alcohols, such as methanol and ethanol; acetone; etc.

The temperature at which the extraction is carried out can vary from ambient up to the melting point of the polyolefin. The extraction time depends on the extraction temperature, and the time and temperature are chosen so that the desired amount of plasticizer is removed from the filaments or fibers. As mentioned previously, it has been found to be desirable to leave a plasticizing amount of plasticizer in the final product. Therefore, extraction would be carried out under temperature and time conditions such that the desired amount of the plasticizer is left in the product. The particular means employed to carry out the extraction is not part of the present invention. The extraction may be carried out on a batch basis or on a continuous basis by passing the strand like article, whether in filament or fiber form, through a liquid and/or vapor bath of the extraction media, generally in a countercurrent extraction manner. The extraction media and the plasticizer may then be recovered by distillation or other suitable separation means.

The fibers of the present invention may be formed by conventional fiber forming techniques known in the art. For example, fibers may be formed by melt blowing in which the compositions disclosed herein are fed to an extruder, for plastication, the extrudate from the extruder fed to a spinneret type die head containing a plurality of small die openings, and feeding the material from the die openings into a gas stream to attenuate the fibers. The fibers may be collected upon a moving foraminous collection device as a mat. Suitable devices are described in U.S. Patent No. 3,650,866 and U.S. Patent No. 3,947,537.

Filaments may be formed by extruding the extrudate through a die orifice of a suitable type, such as a spinneret type die or, in the case of monofilaments, through a plate containing many small holes, and attenuating the filaments by conventional mechanical means either while the filaments are in a heated state or after cooling, and preferably after extraction. The filaments may, if desired, be chopped into staple fibers to provide fibers having a larger diameter than is usually formed by melt blowing.

The filaments and fibers of the present invention have a void volume greater than about 20%, preferably greater than about 50%, and as high as about 80%. Void volume is determined by removing the plasticizer by solvent extraction and determining the amount of extracted oil that was present in the filaments or fibers.

The average pore diameter of the pores in the fibers and filaments of the present invention is less than about 1.0 micron, and at least about 90% of the pores have a pore diameter of less than about 0.5 micron. The average pore diameter can range down to about 0.1 micron or less. Pore diameter is measured by conventional mercury intrusion techniques. The pores or porosity of the fibers and filaments of this invention are sometimes referred to herein as "micropores" or "microporosity" and the pores or porosity of woven or nonwoven sheets made from them referred to as "macropores" or "macroporosity."

For fibers formed by the melt blowing process, the average diameter is less than 10 microns, and generally ranges between about 1 and about 10 microns.

The "coarseness" of the fibers of the present invention is less than 1 decigrex, and generally less than about 0.5 decigrex. By comparison, ordinary polyolefin melt blown fibers have a coarseness greater than 1 decigrex. Generally speaking, the coarseness of the fibers of the present invention will be approximately 20% to about 50% that of a nonporous fibers of corresponding dimensions, depending upon the void volume. "Coarseness" is measured by TAPPI Method No. T234 SU-67; the decigrex unit is measured as weight of fibers in milligrams per 100 meters of the fibers.

The fibers of the present invention may be used to form nonwoven webs directly as part of the melt blown process as, for example, described in U.S. Patent No. 3,947,537. The nonwoven webs thus formed may be calendered to control the thickness and porosity of the web to desired levels. Alternatively, nonwoven webs can be formed in a separate operation by conventional airlaying techniques either with adhesives to enhance fiber to fiber bonding or by heating and/or pressing such webs to cause fiber to fiber bonding.

The fibers may also be formed into webs by the wetlaid processes used in cellulosic paper manufacture. The fibers, being wettable, can be formed into a web either alone or in admixture with cellulosic fibers. Although the fibers of the present invention are wettable, they are hydrophobic and it is, therefore, desirable to employ a dispersing agent to aid in the uniform dispersion of the fibers in aqueous slurries. Suitable dispersing agents include anionic surfactants, such as alkali salts of higher fatty acids, alkylsulfonic acid salts, alkylaryl sulfonate salts and sulfosuccinate ester salts. As an additive to cellulosic fibers, the fibers of the present invention enhance optical properties, such as brightness and opacity, of paper formed from such a blend. Such paper has enhanced printability with inks of all types, particularly where the fibers of the present invention constitute all or a substantial portion of the fibers in the paper web. The present fibers also impart water resistance to such paper webs.

Webs formed from fibers of the present invention, whether formed by an airlaid or wetlaid technique, and whether or not they are mixed with cellulosic fibers, exhibit enhanced printability with inks of all types, and such webs are either water resistant (where the fibers of the present invention are present as the sole or major portion of the total fiber content) or exhibit enhanced water resistance (where the fibers of the present invention are present to a lesser extent).

The continuous filaments of the present invention may be formed into spunbonded webs by forming a web of the filaments ranging from less than about 0.5 to about 10 microns in thickness and bonding under heat and pressured by conventional techniques, such as those used to form Tyvek (trademark of E. I. Dupont) or used in the Docan process (Lurgi Mineroltechnik GmbH).

Although generally round or oval in cross-section, the fibers and filaments of the present invention may be made in almost any cross-sectional shape, and may be hollow instead of solid, by choosing an appropriate die shape.

The fibers and filaments of the present invention may be used for any use to which fibers and filaments of other materials are currently used. Because of their porosity, they form articles of lighter weight than similar, solid fibers or filaments. This property, together with the properties of water resistance and excellent dyeability, makes woven and nonwoven fabrics and webs made therefrom particlarly useful for tenting and clothing. The fibers and filaments of the present inevntion, and fabrics and webs made therefrom, also make excellent filter media, and can also be used as the substrate for time release of pharmaceuticals, agricultural and other chemicals.

A particularly good use for the woven and nonwoven webs made from the filaments and fibers of the present invention are as battery separators. It is known to make battery separators from nonwoven webs of polyolefins, such as is disclosed in U.S. Patent No. 3,870,567, and it is known to make battery separators from microporous sheets, such as is disclosed in U.S. Patent No. 3,351,495. However, it was not known before the present invention to form battery separators of fibers or filaments that were microporous.

The use of microporous filaments or fibers that are wettable to form the battery separator provides greatly enhanced ability to absorb electrolyte over prior nonwoven web type separators or over prior microporous sheet separators. This is due to the fact that separators formed of the filaments or fibers of this invention exhibit both macroporosity and macroporosity. This property is particularly useful in forming "starved electrolyte" type batteries where the ability of the separator to absorb and retain electrolyte is critical since the only electrolyte present is that absorbed by the separator and plate.

The woven or nonwoven webs may be used as separators by themselves or attached to another separator material, such as the sheet type separator disclosed in U.S. Patent No. 3,351,495. Such nonwoven web laminates permit the use of much thinner sheet separators to which the nonwoven web is attached (such as the sheet separator of the aforementioned '495 patent) since the nonwoven web acts as a reinforcing layer.

The separators of the present invention may be substituted for glass fiber type separators currently used and disclosed in numerous issued patents as, for example, U.S. Patent Nos. 4,072,802, 4,153,759, etc., and are superior to such glass fiber separators due to the microporosity of the fibers and filaments of the present invention.

It is preferred to make the separators from the fibers and filaments of this invention at thicknesses of less than about 3,8x10² microns) (15 mils), and preferably from about 25,40 to about 2,54x10² microns (1 to about 10 mils). Such separators exhibit an electrical resistance of less than about 9,1x10⁻² milliohms per square centimeter per micron thickness (1.5 milliohms per square inch per mil thickness). For starved electrolyte type batteries the thickness may be up to 2,54x10³ microns (100 mils).

The following examples illustrate specific ways of practicing the present invention, but are not to be construed as limiting the scope of the invention:

### Example 1

A mixture containing 16.78 kilograms (37 pounds) of ultrahigh molecular weight polyethylene (Himont 1900 UHMW Polymer), 62.14 kilograms (137 pounds) of hydrated, amorphous silica (Hi-Sil 233 manufactured by PPG Industries), and 0.27 kilograms (0.6 pounds) of Petrac CA-81 (a lubricant manufactured by Desoto, Inc) is thoroughly blended in a Littleford high intensity mixer for two minutes. To the mixer was added 123 liters (27 gallons) of Shellflex 412 (a petroleum hydrocarbon oil manufactured by Shell Oil Company) at a temperature of about 51.7°C (125°F), and the resulting mixture blended for an additional five minutes. The resulting mixed blend is placed into a Marion continuous blender and blended until fed to the extruder. The blend is metered to the feed port of a Leistritz Model ZSE 96 extruder at the rate of 5.7x10⁻² kg/sec (450 pounds per hour). At the same time, Shellflex 412 is continuously metered into the feed port of the extruder at the rate of .63x10⁻² kg/sec (50 pounds per hour). The barrel is heated to a temperature of 220°C. The extrudate is fed to a die having the design disclosed in U.S. Patent No. 3,947,537 maintained at a temperature of 220°C. Hot air 316°C (600°F) is fed into the manifold surrounding the die holes at a rate that provides good fiber formation. The fibers thus formed are collected on a rotary screen located 61cm (24 inches) from the die. A representative sample weighing 100 grams of the collected fibers is placed into the 12 liter flask of a Soxhlet extractor containing 6 liters of 1,1,1-trichloroethane and extracted for 15 minutes at 72°C. The extracted fibers have a void volume of approximately 60%.

### Example 2

A hand sheet is prepared from the fibers of Example 1 in accordance with TAPPI T205 m-58. The resulting handsheet exhibits good formation, is very white in appearance and holds together nicely.

### Example 3

The procedure of Example 1 using the same composition is repeated except that the heated air to the manifolds is turned off. The continuous filaments of extrudate thus formed are allowed to cool. Several lengths of filaments approximately one meter in length are cut and extracted in a Soxhlet extractor as in Example 1. After extraction, the filaments are stretched (attenuated) to a length of approximately two meters. The diameter is reduced as a result of this stretching and very white, continuous filaments are obtained which are wettable.

### Example 4

Example 1 is repeated except that the collector is located approximately 25.4cm (10 inches) from the die. The resulting mat is cut into a sheet approximately 15.2cm x 15.2cm (6 x 6 inches) in size. The sheet is extracted in a Soxhlet extractor as in Example 1. The extracted sheet is placed between two plates of a press approximately 25.4cm x 25.4cm (10 x 10 inches) in size at a plate temperature of about 138°C (280°F). The plates are compressed to a gap of about 10 mils and kept closed for about 20 seconds. The resulting nonwoven web is white in appearance and is wettable.

### Example 5

The nonwoven web of Example 4 is measured for electrical resistance in a Palico tester involving a ten minute soak in boiling (100°C) water and a twenty minute soak in 1.780 specific gravity sulfuric acid at 26°C. The electrical resistance is 1.6 milliohms per sq cm (10 milliohms per square inch).

### Example 6

A mixture containing 1.5kg (3.3 pounds) of ultrahigh molecular weight polyethylene (Rimont 1900 UHMW Polymer), 5.2kg (11.5 pounds) of hydrated, amorphous silica (Hi-Sil 233 manufactured by PPG Industries), .03kg (0.06 pounds) of Irganox B 215 (an antioxidant/stabilizer manufactured by Ciba-Geigy), and .03kg (0.06 pounds) of Petrac CA-81 (a lubricant manufactured by Desote, Inc.) was thoroughly blended in a Littleford high intensity mixer for two minutes. To the mixer was added 17.27 liters (3.8 gallons) of Shellflex 412 (a petroleum hydrocarbon oil manufactured by Shell Oil Company) at a temperature of about 21°C (70°F), and the resulting mixture blended for an additional five minutes. The blend was metered to the first feed port of a Batol Model BTS 40 extruder at the rate of 31 grams per minute. At the same time, Shellflex 412 was continuously metered into the second feed port of the extruder at the rate of 11 grams per minute. The barrel was heated to a temperature of 195°C to 240°C. The extruder is fed to a die having the design disclosed in U.S. Patent No. 3,947,537. The nosepiece of the die was 25.4cm (ten inches) in length and had 100 holes each of which had a diameter of .064cm (0.025 inch). The die was maintained at a temperature of 236°C to 315°C. Hot air 316°C (600°F) is fed into the manifold surrounding the die holes at a rate that provides good fiber formation. The fibers thus formed are collected on a rotary screen located approximately 91.44cm (36 inches) from the die. A representative sample weighing 100 grams of the collected fibers is placed into the 12 liter flask of a Soxhlet extractor containing 6 liters of 1,1,1-trichloroethane and extracted for 15 minutes at 75°C. The extracted fibers have a void volume of approximately 60%.

## Claims

1. An attenuated strand like, non-hollow article comprised of 10% to 90% by volume of an ultra high molecular weight polyolefin selected from the group consisting of homopolymers of ethylene, propylene and butylene; 10% to 90% by volume of a hygroscopic filler having a particle size less than 10 microns and a surface area greater than 30 m²/gram; and about 1% to 15% by volume of a plasticizer, in which the polyolefin, filler and plasticizer always add up to 100% by volume; said article having a void volume greater than 20% of the article.

2. The article of Claim 1 wherein the filler-is a material having surface silanol groups.

3. The article of Claim 2 wherein the filler is silica.

4. The article of Claim 1 wherein the polyolefin is polyethylene having an inherent viscosity greater than about 5 dl/gram.

5. The article of Claim 1 wherein the plasticizer is a petroleum hydrocarbon oil.

6. The article of Claim 1 in which the average diameter of said article is in the range of 1 to 10 microns.

7. A nonwoven web formed of a multiplicity of the strand like articles of Claim 1, said web having a macroporosity greater than about 50% and a maximum macropore size less than about 25 microns.

8. A waterlaid paper web formed of a multiplicity of the strand like articles of Claim 1.

9. The paper web of Claim 8 containing cellulosic fibers.

10. A woven fabric formed of a multiplicity of the strand like articles of Claim 1.

11. A battery separator comprised of a web formed of a multiplicity of the strand like articles of Claim 1, said web having a thickness of between 25,4 and 2,54x10³ microns (1 and 100 mils) and an electrical resistance of less than about 9,1x10⁻² milliohms/cm² per micron thickness (1.5 milliohms per square inch per mil thickness).

12. A process of forming microporous strand like articles which are wettable comprising forming a mixture of an ultra high molecular weight polyolefin and a hygroscopic filler having a particle size less than about 10 microns and a surface area greater than about 30 m²/gram; feeding the mixture and a plasticizer to the feed port of an extruder; heating and mixing the blend of the mixture and plasticizer in the extruder at a temperature sufficient to plasticate the blend; feeding the extrudate from the extruder to a die suitable for forming strand like articles; expressing strand like articles from the die; and extracting sufficient plasticizer from the strand like articles to achieve a void volume greater than 20%.

13. The process of Claim 12 wherein the strand like articles are attenuated after extraction.

14. The process of Claim 12 wherein the strand like articles are attenuated by contacting the strand like articles with heated air after they are expressed from the

## Patentansprüche

1. Gestreckter, strangartiger, nichthohler Artikel bestehend aus 10 bis 90 Vol.-% eines Polyolefins mit extrem hohem Molekulargewicht ausgewählt aus der Gruppe bestehend aus Homopolymeren Ethylen, Propylen und Butylen; 10 bis 90 Vol.-% eines hygroskopischen Füllmittels mit einer Partikelgröße von weniger als 10 µm und einer Oberfläche von mehr als 30 m²/g; und etwa 1 bis 15 Vol.-% eines Weichmachers, wobei das Polyolefin, das Füllmittel und der Weichmacher sich immer zu 100 Vol.-% aufaddieren und der Artikel ein Porenvolumen von mehr als 20 % des Artikels hat.

2. Artikel nach Anspruch 1, dadurch gekennzeichnet, daß das Füllmittel ein Material mit Oberflächensilanolgruppen ist.

3. Artikel nach Anspruch 2, dadurch gekennzeichnet, daß das Füllmittel Siliziumoxid ist.

4. Artikel nach Anspruch 1, dadurch gekennzeichnet, daß das Polyolefin Polyethylen mit einer Eigenviskosität von mehr als etwa 5 dl/g ist.

5. Artikel nach Anspruch 1, dadurch gekennzeichnet, daß der Weichmacher ein Erdöl-Kohlenwasserstoff ist.

6. Artikel nach Anspruch 1, dadurch gekennzeichnet, daß der mittlere Durchmesser des Artikels im Bereich von 1 bis 10 µm liegt.

7. Nichtgewebte Bahn, welche aus einer Vielzahl von strangartigen Artikeln gemäß Anspruch 1 gebildet ist, dadurch gekennzeichnet, daß die Bahn eine Makroporosität von mehr als etwa 50 % und eine maximale Makroporengröße von weniger als etwa 25 µm hat.

8. Wasserbelegte Papierbahn, gekennzeichnet durch eine Vielzahl von strangartigen Artikeln gemäß Anspruch 1.

9. Papierbahn nach Anspruch 8, gekennzeichnet durch Zellulosefasern.

10. Webstoff, gekennzeichnet duch eine Vielzahl von strangartigen Artikeln gemäß Anspruch 1.

11. Batterietrennelement bestehend aus einer Bahn, welche aus einer Vielzahl von strangartigen Artikeln gemäß Anspruch 1 gebildet ist, dadurch gekennzeichnet, daß die Bahn eine Dicke zwischen 25,4 und 2,54 ∗ 10³ µm (1 und 100 mils) und einen elektrischen Widerstand von weniger als etwa 9,1 ∗ 10⁻² mOhm/cm² pro Dicke in µm (1,5 mOhm/inch² pro Dicke in mil) hat.

12. Verfahren zum Bilden mikroporöser strangartiger Artikel, welche benetzbar sind, umfassend die folgenden Schritte: Bilden eines Gemisches aus einem Polyolefin mit extrem hohem Molekulargewicht und einem hygroskopischen Füllmittel mit einer Partikelgröße von weniger als etwa 10 µm und einer Oberfläche von mehr als etwa 30 m²/g; Zuführen des Gemisches und eines Weichmachers zur Eingabeöffnung eines Extruders; Erwärmen und Vermischen der Mischung aus dem Gemisch und dem Weichmacher in dem Extruder bei einer zum Plastifizieren der Mischung ausreichenden Temperatur; Zuführen des Extrudats von dem Extruder zu einem für die Bildung strangartiger Artikel geeigneten Düse; Herauspressen strangartiger Artikel aus der Düse; und Extrahieren einer ausreichenden Menge des Weichmachers aus den strangartigen Artikeln zum Erzeugen eines Porenvolumens von mehr als 20 %.

13. Verfahren nach Anspruch 12, dadurch gekennzeichnet, daß die strangartigen Artikel nach dem Extrahieren gestreckt werden.

14. Verfahren nach Anspruch 12, dadurch gekennzeichnet, daß die strangartigen Artikel durch Beaufschlagen der strangartigen Artikel mit erwärmter Luft gestreckt werden, nachdem sie aus der Düse herausgepreßt worden sind.

## Revendications

1. Article non creux en cordon affiné constitué de 10% à 90% en volume d'une polyoléfine de poids moléculaire ultra élevé choisi à partir de la fonction qui est composé d'homopolymères d'éthylène, de propylène et de butylène; de 10% à 90% en volume d'une matière de remplissage hygroscopique ayant une dimension de particule inférieure à 10 microns et une superficie supérieure à 30 m²/gramme; et d'environ 1% à 15% en volume d'un agent plastifiant, dans lequel la polyoléfine, la matière de remplissage et l'agent plastifiant s'ajoutent toujours pour arriver à 100% en volume; ledit article ayant un volume vide supérieur à 20% du volume de l'article.

2. Article selon la revendication 1, dans lequel la matière de remplissage est une matière présentant des fonctions de surface de silanol.

3. Article selon la revendication 2, dans lequel la matière de remplissage est de la silice.

4. Article selon la revendication 1, dans lequel la polyoléfine est du polyéthylène ayant une viscosité inhérente supérieure à environ 5 dl/gramme.

5. Article selon la revendication 1, dans lequel l'agent plastifiant est une huile d'hydrocarbure de pétrole.

6. Article selon la revendication 1, dans lequel le diamètre moyen de chaque article est dans une plage allant de 1 à 10 microns.

7. Tissu non tissé formé par un grand nombre d'articles du type cordon selon la revendication 1, ledit tissu ayant une macroporosité supérieure à environ 50% et une dimension maximale de macropore inférieure à environ 25 microns.

8. Tissu de papier vergé à l'eau formé par un grand nombre d'articles du type cordon selon la revendication 1.

9. Tissu de papier selon la revendication 8 contenant des fibres cellulosiques.

10. Etoffe tissée formée par un grand nombre d'articles du type cordon selon la revendication 1.

11. Séparateur de batterie constitué d'un tissu formé par un grand nombre d'articles du type cordon selon la revendication 1, ledit tissu ayant une épaisseur entre 25,4 et 2,54 x 10³ microns et une résistance électrique inférieure à environ 9,1 x 10⁻² milliohms/cm² par micron d'épaisseur.

12. Procédé de formation d'articles du type cordon microporeux qui sont humidifiables comprenant la formation d'un mélange de polyéfine à poids moléculaire ultra élevé et d'un agent de remplissage hygroscopique ayant une dimension de particule inférieure à environ 10 microns et une superficie supérieure à environ 30 m²/gramme; l'amenée du mélange et d'un agent plastifiant à l'orifice d'alimentation d'une extrudeuse; le chauffage et le mélange du mélange et de l'agent plastifiant dans l'extrudeuse à une température suffisante pour plastifier le mélange; l'amenée du produit d'extrusion provenant de l'extrudeuse jusqu'à une matrice adaptée pour la formation des articles du type cordon; l'extraction des articles du type cordon de la matrice; et l'extraction de suffisamment d'agent plastifiant des articles du type cordon pour obtenir un volume vide supérieur à 20%.

13. Procédé selon la revendication 12, dans lequel les articles du type cordon sont affinés après extraction.

14. Procédé selon la revendication 12, dans lequel les articles du type cordon sont affinés en mettant en contact les articles de cordon avec de l'air chaud après leur extraction de la matrice.
